# EUROPÄISCHE PATENTSCHRIFT

(11) **EP 4 155 598 B1**
(45) Veröffentlichungstag und Bekanntmachung des Hinweises auf die Patenterteilung: **23.07.2025**
(21) Anmeldenummer: 22197371.2
(22) Anmeldetag: 23.09.2022
(51) Int. Cl.: F16L 55/027

(54) **DRUCK-ARMATUR FÜR MATERIALSTRÖME, VERFAHREN ZUM BETREIBEN VON DRUCKARMATUREN SOWIE VERWENDUNG**
PRESSURE FITTING FOR MATERIAL FLOWS, METHOD FOR OPERATING PRESSURE FITTINGS AND USE
ARMATURE DE PRESSION POUR FLUX DE MATÉRIAUX, PROCÉDÉ DE FONCTIONNEMENT D'ARMATURES DE PRESSION ET UTILISATION

(30) Priorität: 24.09.2021 DE 102021124807; 24.09.2021 DE 102021124808; 24.09.2021 DE 102021124812
(43) Veröffentlichungstag der Anmeldung: 29.03.2023
(73) Patentinhaber: Daume, Achim, 30938 Burgwedel (DE)
(72) Erfinder: Daume, Achim, 30938 Burgwedel (DE)
(74) Vertreter: Habenicht, Wieland

(56) Entgegenhaltungen:
- EP-B1- 2 592 191
- CA-A- 929 826
- CN-A- 110 425 367
- CN-A- 110 630 836
- GB-A- 694 370

## Beschreibung

Die Erfindung betrifft eine Druckarmatur für Materialströme, ein Verfahren zum Betreiben von Druckarmaturen sowie eine Verwendung.

In vielen Industriezweigen werden Rohrleitungssysteme beispielsweise in chemischen Anlagen, Raffinerien und Kraftwerken, in denen Pumpen, Apparate und Druckarmaturen in großen Stückzahlen eingesetzt werden. Diese Anlagen werden geregelt oder gesteuert, wobei durch diese sehr unterschiedliche Materialströme strömen, und dies bei sehr unterschiedlichen Betriebsbedingungen von beispielsweise -273 Grad Celsius bis +640 Grad Celsius und Betriebsdrücken von 0 bar bis 800 bar. Die Materialströme können zähflüssig bis dampfförmig und stark basisch bis stark sauer sein. Für die sehr unterschiedlichen Materialströme müssen auch sehr unterschiedliche Werkstoffe eingesetzt werden Aus CA 929 826 A ist u.a. eine Vorrichtung bekannt, die für Medien geeignet ist, die mit hohem Druck und Geschwindigkeit durch die Vorrichtung hindurch strömen. Weitere Vorrichtungen sind aus CN 110 630 836 A, EP 2 592 191 B1, CN 110 425 367 A sowie GB 694 370 A bekannt.

Aus dem Stand der Technik sind vielfältige Druckarmaturen für Materialströme bekannt. Diese bestehen aus obigen Erörterungen aus vielfältigen Materialien, wobei die Druckarmaturen vor deren Einsatz sehr aufwändig auf Materialsicherheit zu prüfen sind. Insbesondere Risse, Lunker und Fremdeinschlüsse beeinflussen die jeweilige Materialqualität zum Teil erheblich. Solche Druckarmaturen werden mittels Ultraschalls, Magnetflussbestimmungen, Röntgen sowie Farbstoff-UV-Fluoreszenz-Messungen sowie Farbstoff-Eindringungsprüfungen geprüft, wobei diese Prüfungen aufgrund der oft anspruchsvollen Geometrie der Bauteile solcher Druckarmaturen aufwendig und somit kostenintensiv sind.

Aufgabe der vorliegenden Erfindung ist es daher, eine Druckarmatur bereitzustellen, die die oben genannten Nachteile zumindest zu einem großen Teil vermeidet, so dass die zeit- und somit kostenintensiven Materialprüfungen erheblich reduziert werden können.

Dieses Problem wird erfindungsgemäß gelöst durch eine Druckarmatur nach Anspruch 1, ein Verfahren nach Anspruch 10 und eine Verwendung nach Anspruch 11.

Die erfindungsgemäße Druckarmatur für Materialströme (im erfindungsgemäßen Sinne sind die Begriffe "Materialstrom" und "Stoffstrom" identisch ) weist auf einen Grundkörper mit einer separaten druckmindernden Einheit auf.

Unter dem Begriff "Materialunterbrechung" ist im erfindungsgemäßen Sinne eine Unterbrechung des Materialflusses zwischen den oben aufgeführten Teilen, also druckmindernde Einheit, Grundkörper und Wandungskörper, zu verstehen. Mit anderen Worten: diese Teile berühren sich im Erfindungskontext zwar, entweder rein mechanisch oder beispielsweise und insbesondere auch über Verschweißungen, jedoch handelt es sich immer um separate Teile und nicht um ein einziges Teil, denen in ihren jeweiligen Abschnitten und Bereichen die obigen Teile zugeordnet werden (können). Somit gehen diese Teile nicht fließend - als Abschnitte und Bereiche eines einzigen Teils - ineinander über, sondern sind in diesem Sinne in materialtechnischem Sinne voneinander getrennt, so dass diesbezügliche Materialunterbrechungen realisiert sind, die beispielsweise und insbesondere bei lediglichem Berühren der Teile untereinander quasi riss- oder spaltartig in Erscheinung treten können, wobei es sich hierbei natürlich nicht um echte Risse handelt, die ja offensichtlich negative Auswirkungen auf das Material des jeweiligen Teils hätten, sondern um eben diese quasi wie Risse oder Spalte aussehenden Materialunterbrechungen zwischen den einzelnen Teilen (also druckmindernde Einheiten, Grundkörper und Wandungskörper). Durch diese Materialunterbrechungen sind die jeweilige notwendigen Materialuntersuchungen in der Regel leichter zu bewerkstelligen, da im Vorfeld eines späteren Zusammenbaus der einzelnen Teile zu einer Druckarmatur diese separat untersucht werden können, so dass auch komplex verlaufende Strukturen vermieden werden, die im allgemeinen relativ schwierig zu untersuchen/prüfen sind.

Es ist von Vorteil, wenn a.) der Grundkörper ein Formteil ist, und/oder b.) der Wandungskörper ein Formteil ist, da sich auf diese Weise Kosten einsparen lassen beim Aufbau einer erfindungsgemäßen Druckarmatur.

Weiterhin ist es von Vorteil, wenn a.) der Grundkörper gussteilfrei und/oder schmiedeteilfrei ausgestaltet ist, beispielsweise als Pressteil, und/oder b.) der Wandungskörper gussteilfrei und/oder schmiedeteilfrei augestaltet ist, beispielsweise und insbesondere als Pressteil, da solche Teile in der Regel sich besser auf Materialfehler untersuchen lassen, beispielsweise und insbesondere mittels Ultraschallmessungen.

Bei der Ausgestaltung des Grundkörpers als Formteil entfallen viele Materialprüfungen, da solche Formteile bei bestimmten Materialqualitäten in der Regel vorgeprüft sind. Bei der Ausgestaltung als gussteil-frei und/oder schmiedeteil-frei entfallen zwar nicht per se die notwendigen Materialprüfungen, diese gestalten sich jedoch als relativ leicht, da Gussteile und/oder Schmiedeteile häufig nur sehr unzureichend zu prüfen sind; dies betrifft insbesondere Ultraschallprüfungen. Dennoch kann es im Einzelfall ratsam sein, dass der Grundkörper gegossen, geschmiedet, gepresst oder gezogen sind.

Im Erfindungskontext sind unter der Bezeichnung "Formteile" Bauteile zu verstehen, die häufig einfachen Geometrie-Ausgestaltungen wie beispielsweise und insbesondere Rohren, T-Stücken, Kreuz-Stücken, Bögen und Y-Stücken entsprechen und oft auch Material vorgeprüft sind, wobei letztes Kriterium nicht zwingend ist. Solche Formteile werden in sehr hohen Stückzahlen gefertigt, wobei diese in der Regel - jedoch nicht zwingend - gussteilfrei und/oder schmiedeteilfrei sind. Gussteile und Schmiedeteile sind in der Regel nur sehr schwer zu prüfen, wobei dies insbesondere die Ultraschall-Messungen betrifft.

In diesem Kontext ist es vorteilhaft, da bewährt, wenn das Grundkörper-Formteil und/oder das Wandungskörper-Formteil eine Rohrleitung, T-Stück, Y-Stück, Kreuzstück, Bogen-Stück oder ein kugelartiges Stück sind/ist. Diese Formen stellen die häufigsten und üblichen Formen der Formteile dar.

Erfindungsgemäß besteht die druckmindernde Einheit und/oder der Grundkörper und/oder der Wandungskörper in vorteilhafterweise Weise, da bewährt, aus einem der nachfolgenden Materialien: C 22, St. 52, warmfeste ferritische Werkstoffe, 16Mo3, 13CrMo44, 10CrMo910, 14MoV63, P91, P92, C22.8, austenitische Werkstoffe, insbesondere 1.4571, 1.4580, 1.4404, 1.4301, 1.4550, 1.4581, 1.4401, 1.4521, 1.4552, 1.4541, 1.4520, PE, PE-X, PP, PVC, Kupfer-Werkstoffe, Kupfermetalllegierungen, Bronzen, Aluminium-Mehrstoff-Bronze, AB45, ESM, CW024A, CW509L, CW610N, CW613N, CW614N, CW617N, CW702R, CW706R, CW717R, CW715R, CW352H, CW354H, CW307G, CW353H, P195TR1, P195TR2, P235TR1, P235TR2, P195GH, P235GH, P265GH, 8MoB5-4, 16Mo3, X11CrMo9-1+I, 13CrMo4-5, X20CrMoV11-1, P355NH, P195GH, P285GH, 16Mo3, P355NH, Werkstoffe der EN 12952/12953, P215NL, P265NL, P355N, P480NL1, P620Q, P890QH, 8460NH, L290NB, L450QB, L245NB, L555MB, L360MB, L280MB, Werkstoffe der EN 10208-2, Werkstoffe der AD2000 - HP110R, AD2000 - HP120R, AD2000 -W2, AD2000 - W/6, AD2000 - W6/1, AD2000 - W6/2, Glas, Keramik, Kunststoff, Polyethylen, Polyamid, Polyvinylchlorid, Polytetrafluorethylen, Polyoxymethylen.

In diesem Kontext ist es vorteilhaft, da bewährt, wenn die druckmindernde Einheit gussteil-frei und/oder schmiedeteil-frei ausgestaltet ist, um eben keine größeren Schwierigkeiten bei der Materialprüfung, insbesondere bei der Ultraschallprüfung, zu bekommen. Dennoch kann es im Einzelfall sinnvoll sein, dass die druckmindernde Einheit gegossen, geschmiedet, gepresst oder gezogen ist.

Es ist von besonderem Vorteil, da bewährt, wenn a.) die druckmindernde Einheit hülsenartig und als in den Grundkörper einsetzbares Einzelteil ausgestaltet ist, und/oder b.) der Grundkörper als in den Wandungskörper einsetzbares Einzelteil ausgestaltet ist, um auf diese Weise ein flexibles System für Druckarmaturen bereitzustellen, um den jeweilig spezifischen Anforderungen an Material, Sicherheit und Druckminderung gerecht zu werden.

Um einen besonders zuverlässigen Betrieb zu gewährleisten, ist es von Vorteil, wenn a.) die druckmindernde Einheit im Grundkörper mechanisch fixiert ist, beispielsweise und insbesondere, wenn die druckmindernde Einheit mittels stiftförmiger Elemente, Punktschweißung, Schweißung, Klebung oder mittels eines Gewindes mechanisch fixiert ist, und/oder b.) der Grundkörper im Wandungskörper mechanisch fixiert ist, beispielsweise und insbesondere mittels stiftförmiger Elemente, Punktschweißung, Schweißung oder Klebung.

Weiterhin ist es von Vorteil, da bewährt, wenn die druckmindernde Einheit mindestens eine druckmindernde Materialfluss-Öffnung aufweist, um durch die Dimensionierung eine an die jeweilige Applikation angemessene Druckminderung zu erzeugen.

Die druckmindernde Einheit kann vorteilhafterweise aus einem zähen Werkstoff, beispielsweise Cr-Ni-Stahl, martensitischem Chromstahl hergestellt sein, der gegenüber Kavitationen resistenter ist. Bei einer eventuellen Schweißung der druckmindernden Einheit mit dem Grundkörper muss auf die Schweißfähigkeit durch geeignete Werkstoffwahl geachtet werden. Eventuell muss die druckmindernde Einheit mit einem Werkstoff gepuffert werden, der sich mit der Schweißnaht und dem Grundkörper verträgt.
A.) zur sicheren Abdichtung der druckmindernden Einheit im Grundkörper ist diese erfindungsgemäß hülsenartig ausgestaltet, die im zusammengebauten Zustand in das Innere des Grundkörpers eingebracht kraft- und/oder formschlüssig wechselwirkt mit einer inneren Auflauffläche des Grundkörpers, und/oder b.) zur sicheren Abdichtung des Grundkörpers im Wandungskörper ist der Grundkörper im zusammengebauten Zustand in das Innere des Wandungskörpers eingebracht und wechselwirkt kraft- und/oder formschlüssig mit dem Wandungskörper.

Erfindungsgemäß ist im Inneren des Grundkörpers zwischen der druckmindernden Einheit und einem weiteren auf die druckmindernde Einheit folgenden Dichtungsteil ein vorverdichtetes Dichtungselement, beispielsweise und insbesondere aus Graphit, PTFE oder einem gummiähnlichen Werkstoff bestehend, angeordnet.

Das vorverdichtete Dichtungselement übt einen zusätzlich abdichtenden Druck auf die innere Auflauffläche des Grundkörpers respektive auf die druckmindernde Einheit und dem Dichtungsteil aus.

In diesem Kontext ist es von Vorteil, da bewährt, wenn das Wandungskörper-Formteil eine Rohrleitung, T-Stück, Y-Stück, Kreuzstück, Bogen-Stück oder ein kugelartiges Stück ist.

Die Erfindung wird in den nachfolgenden Ausführungsformen lediglich beispielhaft und nicht-beschränkend näher erläutert, wobei:
Figur 1 - eine skizzenhafte Querschnittsdarstellung verschiedener Formteile ist;

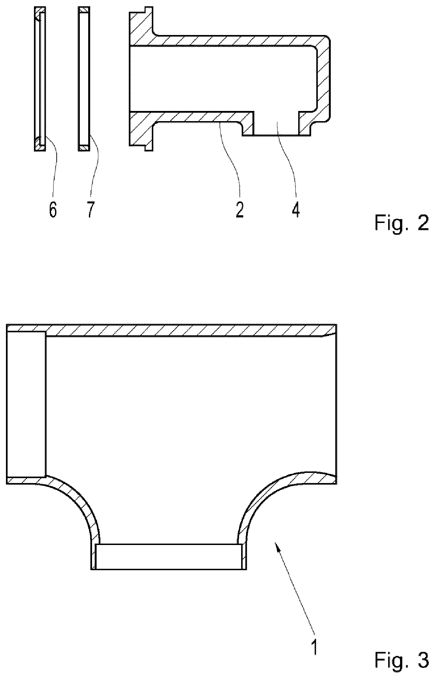

Figur 2 - eine skizzenhafte Querschnittsdarstellung einer Ausführungsform einer druckmindernden Einheit nebst Dichtungsteil und vorverdichtetem Dichtungselement ist;
Figur 3 - eine skizzenhafte Querschnittsdarstellung einer Ausführungsform eines Grundkörpers ist;

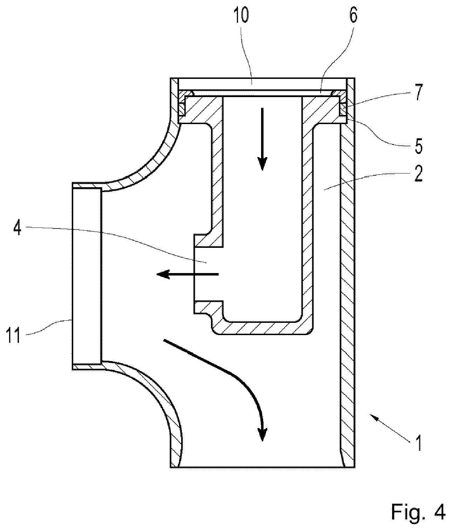

Figur 4 - eine skizzenhafte Querschnittsdarstellung der in den Figuren 2 und 3 dargestellten Teile im zusammengebauten Zustand ist;
Figur 5 - eine skizzenhafte Querschnittsdarstellung der in Figur 4 dargestellten Teile im zusammengebauten Zustand, die in einem Wandungskörper angeordnet sind, ist;
Figur 6 - eine skizzenhafte Querschnittsdarstellung einer zur in Figur 5 gezeigten, weiteren Ausführungsform für die Kryotechnik (doppelwandig).

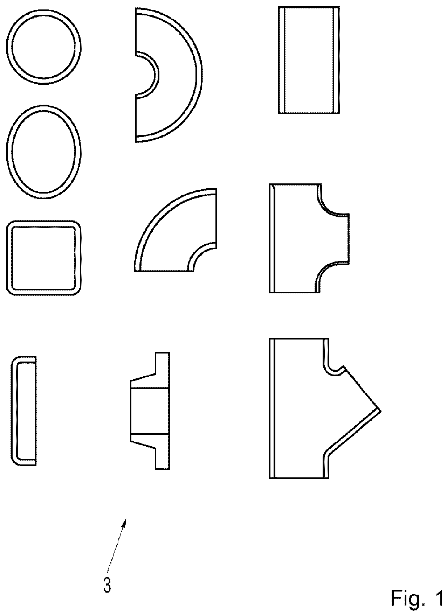

In der Figur 1 sind verschiedene Formteile 3 zu erkennen, die sowohl als Grundkörper 1 als auch als Wandungskörper 8 bei mehrwandigen Druckarmaturen fungieren können.

Die Druckarmatur für Materialströme weist einen Grundkörper 1 mit einer druckmindernden Einheit 2 auf, wobei der Grundkörper 1 a.) ein Formteil 3 ist und b.) gussteil-frei und schmiedeteil-frei ausgestaltet ist.

Das Grundkörper-Formteil ist ein T-Stück.

Der Grundkörper 1 besteht aus einem der nachfolgenden Materialien: Rohrleitungswerkstoffe, C 22, St. 52, warmfeste ferritische Werkstoffe, 16Mo3, 13CrMo44, 10CrMo910, 14MoV63, P91, P92, C22.8, austenitische Werkstoffe, insbesondere 1.4571, 1.4580, 1.4404, 1.4301, 1.4550, 1.4581, 1.4401, 1.4521, 1.4552, 1.4541, 1.4520, Stahlmantelrohre, PE, PE-X, PP, PVC, Kupfer-Werkstoffe, Kupfermetalllegierungen, Bronzen, Aluminium-Mehrstoff-Bronze, AB45, ESM, erschmolzene Stähle, CW024A, CW509L, CW610N, CW613N, CW614N, CW617N, CW702R, CW706R, CW717R, CW715R, CW352H, CW354H, CW307G, CW353H, P195TR1, P195TR2, P235TR1, P235TR2, P195GH, P235GH, P265GH, 8MoB5-4, 16Mo3, X11CrMo9-1+I, 13CrMo4-5, X20CrMoV11-1, P355NH, P195GH, P285GH, 16Mo3, P355NH, Werkstoffe der EN 12952/12953, P215NL, P265NL, P355N, P480NL1, P620Q, P890QH, 8460NH, L290NB, L450QB, L245NB, L555MB, L360MB, L280MB, Werkstoffe der EN 10208-2, Werkstoffe der AD2000 - HP110R, AD2000 - HP120R, AD2000 -W2, AD2000 - W/6, AD2000 - W6/1, AD2000 - W6/2. Die druckmindernde Einheit 2 ist in diesem Fall ein Gussteil, kann jedoch auch gussteilfrei ausgestaltet sein.

Die druckmindernde Einheit 2 ist hülsenartig und als in den Grundkörper einsetzbares Einzelteil ausgestaltet.

Die druckmindernde Einheit 2 ist im Grundkörper 1 ist mechanisch fixiert, nämlich mittels stiftförmiger Elemente 9.

Die druckmindernde Einheit 2 besteht aus einem der nachfolgenden Materialien: Rohrleitungswerkstoffe, C 22, St. 52, warmfeste ferritische Werkstoffe, 16Mo3, 13CrMo44, 10CrMo910, 14MoV63, P91, P92, C22.8, austenitische Werkstoffe, insbesondere 1.4571, 1.4580, 1.4404, 1.4301, 1.4550, 1.4581, 1.4401, 1.4521, 1.4552, 1.4541, 1.4520, Stahlmantelrohre, PE, PE-X, PP, PVC, Kupfer-Werkstoffe, Kupfermetalllegierungen, Bronzen, Aluminium-Mehrstoff-Bronze, AB45, ESM, erschmolzene Stähle, CW024A, CW509L, CW610N, CW613N, CW614N, CW617N, CW702R, CW706R, CW717R, CW715R, CW352H, CW354H, CW307G, CW353H, P195TR1, P195TR2, P235TR1, P235TR2, P195GH, P235GH, P265GH, 8MoB5-4, 16Mo3, X11CrMo9-1+I, 13CrMo4-5, X20CrMoV11-1, P355NH, P195GH, P285GH, 16Mo3, P355NH, Werkstoffe der EN 12952/12953, P215NL, P265NL, P355N, P480NL1, P620Q, P890QH, 8460NH, L290NB, L450QB, L245NB, L555MB, L360MB, L280MB, Werkstoffe der EN 10208-2, Werkstoffe der AD2000 - HP110R, AD2000 - HP120R, AD2000 -W2, AD2000 - W/6, AD2000 - W6/1, AD2000 - W6/2. Die druckmindernde Einheit 2 weist mindestens eine druckmindernde Materialfluss-Öffnung 4 auf.

Die druckmindernde Einheit 2 ist hülsenartig ausgestaltet, die im zusammengebauten Zustand in das Innere des Grundkörpers 1 eingebracht kraft- und/oder formschlüssig wechselwirkt mit einer inneren Auflauffläche 5 des Grundkörpers 1.

Im Inneren des Grundkörpers 1 ist zwischen der druckmindernden Einheit 2 und einem weiteren auf die druckmindernde Einheit 2 folgenden Dichtungsteil 6 ein vorverdichtetes Dichtungselement 7 aus Graphit angeordnet ist.

Bei einer mehrwandigen Druckarmatur ist der Grundkörper 1 von mindestens einem Wandungskörper 8 umgeben, der ein a.) Formkörper 3 ist und b.) gussteil-frei und schmiedeteil-frei ausgestaltet ist.

Das Wandungskörper-Formteil ist ein T-Stück.

Der Wandungskörper 8 ist in seiner Formgebung entsprechend der Formgebung des Grundkörpers 1 ausgestaltet.

Der Wandungskörper 8 besteht aus einem der nachfolgenden Materialien: Rohrleitungswerkstoffe, C 22, St. 52, warmfeste ferritische Werkstoffe, 16Mo3, 13CrMo44, 10CrMo910, 14MoV63, P91, P92, C22.8, austenitische Werkstoffe, insbesondere 1.4571, 1.4580, 1.4404, 1.4301, 1.4550, 1.4581, 1.4401, 1.4521, 1.4552, 1.4541, 1.4520, Stahlmantelrohre, PE, PE-X, PP, PVC, Kupfer-Werkstoffe, Kupfermetalllegierungen, Bronzen, Aluminium-Mehrstoff-Bronze, AB45, ESM, erschmolzene Stähle, CW024A, CW509L, CW610N, CW613N, CW614N, CW617N, CW702R, CW706R, CW717R, CW715R, CW352H, CW354H, CW307G, CW353H, P195TR1, P195TR2, P235TR1, P235TR2, P195GH, P235GH, P265GH, 8MoB5-4, 16Mo3, X11CrMo9-1+I, 13CrMo4-5, X20CrMoV11-1, P355NH, P195GH, P285GH, 16Mo3, P355NH, Werkstoffe der EN 12952/12953, P215NL, P265NL, P355N, P480NL1, P620Q, P890QH, 8460NH, L290NB, L450QB, L245NB, L555MB, L360MB, L280MB, Werkstoffe der EN 10208-2, Werkstoffe der AD2000 - HP110R, AD2000 - HP120R, AD2000 -W2, AD2000 - W/6, AD2000 - W6/1, AD2000 - W6/2, Glas, Keramik, Kunststoff, Polyethylen, Polyamid, Polyvinylchlorid, Polytetrafluorethylen, Polyoxymethylen.

Die in den Figuren gezeigten Pfeile zeigen die Strömungsrichtung des jeweiligen Mediums, in diesem Fall Wasser, an. Es ist zu erkennen, wie das Wasser in den Grundkörper 1 und die druckmindernde Einheit 2 fließt und umgelenkt diese wieder druckgemindert verlässt, um dann aus dem Grundkörper 1 auszutreten.

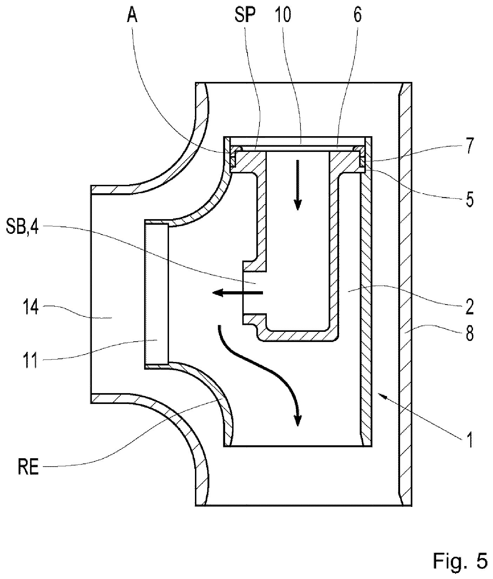

Bei einer mehrwandigen Ausführung kann der Zwischenraum 14 beispielsweise und insbesondere entweder als Vakuum, Niederdruckraum, Hochdruckraum oder mit einem Medium geflutet ausgestaltet sein; dabei kann das Medium im Zwischenraum 14 dasselbe Medium sein, das aus dem Inneren des Grundkörpers 1 stammt oder diesem zugeführt wird.
zur Figur 5:
Das T-Stück erhält Ausdrehungen A für die Bereiche 11, 5 und 7. Das druckmindernde Teil 2 mit Öffnung 4 wird in den Grundkörper 1 in die Ausdrehung A eingeführt; danach wird die Dichtung 7 eingeführt. Anschließend wird der Ring 4/6 eingesetzt. Zwischen 4 und 2 besteht ein kleiner Spalt. Die Teile 4/6 werden mittels Hubbewegung derart weit gegen 2 gedrückt, dass der Spalt die Dichtung 7 vorpresst. Die Dichtung 7, beispielsweise aus Graphit bestehend, ist im vorgespannten Zustand so weit vorgespannt, dass 7 einen zu dichtenden Druck abdichtet. Im angespannten Zustand (Spalt ungefähr Null) wird 6/4 beispielsweise mittels Stifte oder Schweißung/Heftschweißung fixiert. Die Dichtung 7 ist im nicht-eingebauten Zustand auf eine Dichte von ca. 1,2 g/cm3 vorverdichtet. Der Ring 7 wird während des Einbaus je nach Betriebsdruck auf eine Dichte von ca. 1,3 bis 1,9 g/cm3 weiter verdichtet. Die Bohrung SB soll mittig/zentrisch liegen. Teil 2 kann beispielsweise zentrisch an drei Punkten am Umfang fixiert werden. Die eingebauten Teile 2, 5, 7, und 4 werden auf Dichtigkeit geprüft. Das äußere T-Stück 8 wird in Längsrichtung getrennt (zwei Halbschalen). 1 wird in Halbschale eingelegt; zuvor werden Distanzstücke fixiert mittels Schweißung; zweite Halbschale wird auf erste Schale gelegt und rundum verschweißt. 1 wird vor Montage mit Verbindungsmuffe RE versehen.

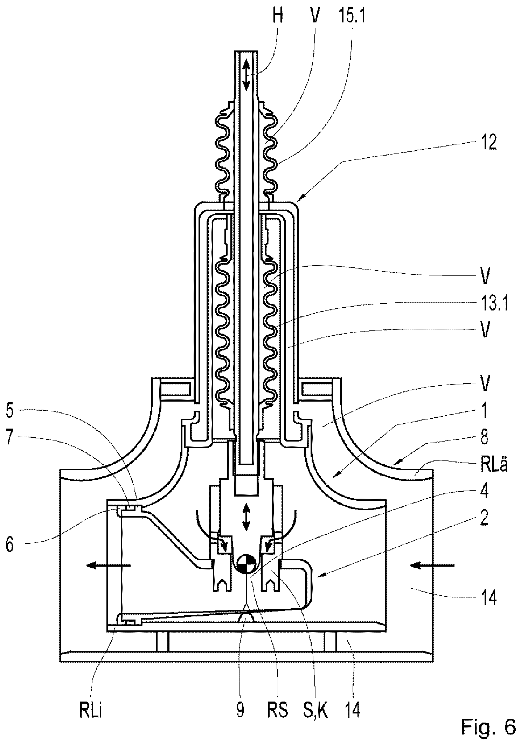

In Figur 6 ist beispielhaft eine besondere doppelwandige Ausführungsform für die Kryotechnik oder toxische Stoffströme dargestellt.

Im Grundkörper 1 fließt ein Stoffstrom (Pfeil). Dieser Grundkörper 1 ist eine Rohrleitung RL, angebunden (z.B. mittels einer Schweißung) beidseitig. Der Stoffstrom fließt durch einen Drosselkörper. Durch den Hub des einen Drosselkörpers wird ein Ringspalt verändert und damit der Durchfluss verändert. Die dreidimensionale Einheit bildet eine Wandung, die den Durchfluss zwingt durch den Drosselkörper (Sitz S/Kegel K) zu fließen. Die Durchflussmenge wird entsprechend der Hubstellung geregelt. Der Wandungskörper 8 umschließt den Grundkörper 1. Der Wandungskörper 8 wird im allgemeinen mit einer äußeren Leitung verbunden. Zwischen dem Grundkörper 1 und dem Wandungskörper 8, beispielhaft innere Rohrleitung RLi und äußere Rohrleitung RLä, besteht ein Hohlraum. Dieser Hohlraum kann mehrere Funktionen erfüllen: Isolierung - Vakuum, beispielhaft kryogene Flüssigkeiten, toxische Stoffe - Warnsystem. Der Stoffstrom muss am Austreten gehindert werden. Deshalb altbewährter Einsatz von metallischen Bälgen, die die Hubbewegung mitmachen, beispielsweise 13.1 Trennung zwischen Stoffstrom und Vakuumraum und 13.2 Trennung zwischen Vakuumraum und Atmosphäre. In Figur 6 geht es darum, dass in einem Doppelwand-System eine doppelwandige Armatur eingebaut ist. Zum einen muss die doppelte Leitung über die Armatur durchgeleitet werden und muss den Armaturenraum miterfassen (isolieren oder überwachen). Figur 6 zeigt die äußere Rohrleitung RLä und die innere Rohrleitung RLi. Bei einer Armatur wird die Drosselstelle mittels Sitz S/Kegel K und Hub von außen verändert (durch Stellung des Kegels K im Sitz S; die sogenannte Drosselung). Die Hauptstellung wird mittels Bewegung der Ventilstellung durchgeführt. Bei einem Doppelwandsystem muss eine Armatur die Hubverstellung (Bewegung der Spindel) sehr gut abdichten (beispielsweise Testen mittels Helium-Lecktest). Solche hohen Dichtigkeitswerte können nur mittels Metallbälgen, beispielsweise 13.1 und 15.1, erreicht werden. Beispielsweise dichtet 15.1 Atmosphäre gegen Vakuum und 13.1 Stoffstrom gegen Vakuum. Die beispielsweise (Teile 8 und 1) verwendeten T-Stähle sind vorzugsweise formgepresste Materialien - beispielsweise kann der austenitische CrNi-Werkstoff 1.4580 verwendet werden. Damit wird eine große Temperatur-, Druck- und chemische Beständigkeit gegen Wasserstoff-Versprödung erreicht.

Betreffend sämtliche Figuren lässt sich feststellen, dass erfindungsgemäß zwischen dem Grundkörper 1 und der druckmindernden Einheit 2 sowie zwischen dem Wandungskörper 8 und dem Grundkörper 1 entsprechende Materialunterbrechungen in oben aufgeführtem Sinne realisiert sind.

## Patentansprüche

1. Druckarmatur für Materialströme, aufweisend einen Grundkörper (1) mit einer im Inneren des Grundkörpers (1) angeordneten separaten druckmindernden Einheit (2),
die druckmindernde Einheit (2) und/oder der Grundkörper (1) und/oder der Wandungskörper (8) aus einem der nachfolgenden Materialien bestehen/besteht: C 22, St. 52, warmfeste ferritische Werkstoffe, 16Mo3, 13CrMo44, 10CrMo910, 14MoV63, P91, P92, C22.8, austenitische Werkstoffe, insbesondere 1.4571, 1.4580, 1.4404, 1.4301, 1.4550, 1.4581, 1.4401, 1.4521, 1.4552, 1.4541, 1.4520, PE, PE-X, PP, PVC, Kupfer-Werkstoffe, Kupfermetalllegierungen, Bronzen, Aluminium-Mehrstoff-Bronze, AB45, ESM, CW024A, CW509L, CW610N, CW613N, CW614N, CW617N, CW702R, CW706R, CW717R, CW715R, CW352H, CW354H, CW307G, CW353H, P195TR1, P195TR2, P235TR1, P235TR2, P195GH, P235GH, P265GH, 8MoB5-4, 16Mo3, X11CrMo9-1+I, 13CrMo4-5, X20CrMoV11-1, P355NH, P195GH, P285GH, 16Mo3, P355NH, Werkstoffe der EN 12952/12953, P215NL, P265NL, P355N, P480NL1, P620Q, P890QH, 8460NH, L290NB, L450QB, L245NB, L555MB, L360MB, L280MB, Werkstoffe der EN 10208-2, Werkstoffe der AD2000 - HP110R, AD2000 - HP120R, AD2000 -W2, AD2000 - W/6, AD2000 - W6/1, AD2000 - W6/2, Glas, Keramik, Kunststoff, Polyethylen, Polyamid, Polyvinylchlorid, Polytetrafluorethylen, Polyoxymethylen
a.) die druckmindernde Einheit (2) hülsenartig ausgestaltet ist, die im zusammengebauten Zustand in das Innere des Grundkörpers (1) eingebracht kraft- und/oder formschlüssig wechselwirkt mit einer inneren Auflauffläche (5) des Grundkörpers (1), und/oder
b.) der Grundkörper (1) im zusammengebauten Zustand in das Innere des Wandungskörpers (8) eingebracht kraft- und/oder formschlüssig wechselwirkt mit dem Wandungskörper (8),
**dadurch gekennzeichnet, dass**
im Inneren des Grundkörpers (1) zwischen der druckmindernden Einheit (2) und einem weiteren auf die druckmindernde Einheit (2) folgenden Dichtungsteil (6) ein vorverdichtetes Dichtungselement (7) angeordnet ist.

2. Druckarmatur nach Anspruch 1,
**dadurch gekennzeichnet, dass**
a.) der Grundkörper (1) ein Formteil (3) ist, und/oder
b.) der Wandungskörper (8) ein Formteil (3) ist.

3. Druckarmatur nach einem der Ansprüche 1 bis 2,
**dadurch gekennzeichnet, dass**
a.) der Grundkörper (1) gussteilfrei und/oder schmiedeteilfrei ausgestaltet ist, und/oder
b.) der Wandungskörper (8) gussteilfrei und/oder schmiedeteilfrei ausgestaltet ist.

4. Druckarmatur nach einem der Ansprüche 1 bis 3,
**dadurch gekennzeichnet, dass**
der Grundkörper und/oder der Wandungskörper eine Rohrleitung, T-Stück, Y-Stück, Kreuzstück, Bogen-Stück oder ein kugelartiges Stück sind/ist.

5. Druckarmatur nach einem der Ansprüche 1 bis 4,
**dadurch gekennzeichnet, dass**
die druckmindernde Einheit (2) gussteil-frei und/oder schmiedeteil-frei ausgestaltet ist.

6. Druckarmatur nach einem der Ansprüche 1 bis 5,
**dadurch gekennzeichnet, dass**
a.) die druckmindernde Einheit (2) hülsenartig und als in den Grundkörper einsetzbares Einzelteil ausgestaltet ist, und/oder
b.) der Grundkörper (1) als in den Wandungskörper (8) einsetzbares Einzelteil ausgestaltet ist.

7. Druckarmatur nach einem der Ansprüche 1 bis 6,
**dadurch gekennzeichnet, dass**
die druckmindernde Einheit (2) und/oder der Grundkörper (1) mittels stiftförmiger Elemente (9), Punktschweißung, Schweißung oder mittels eines Gewindes mechanisch fixiert sind/ist.

8. Druckarmatur nach einem der Ansprüche 1 bis 7,
**dadurch gekennzeichnet, dass**
die druckmindernde Einheit (2) mindestens eine druckmindernde Materialfluss-Öffnung (4) aufweist.

9. Druckarmatur nach Anspruch 8,
**dadurch gekennzeichnet, dass**
das vorverdichtete Dichtungselement (7) aus Graphit, PTFE oder einem gummiähnlichen Werkstoff besteht.

10. Verfahren zum Betreiben von Druckarmaturen,
**dadurch gekennzeichnet, dass**
eine Druckarmatur nach einem der Ansprüche 1 bis 9 verwendet wird.

11. Verwendung von einer Druckarmatur nach einem der Ansprüche 1 bis 9.

## Claims

1. Pressure fitting for material flows, comprising a base body (1) with a separate pressure-reducing unit (2) arranged inside the base body (1), wherein the pressure-reducing unit (2) and/or the base body (1) and/or consist of: C 22, St. 52, heat-resistant ferritic materials, 16Mo3, 13CrMo44, 10CrMo910, 14MoV63, P91, P92, C22.8, austenitic materials, in particular 1.4571, 1.4580, 1.4404, 1.4301, 1.4550, 1.4581, 1.4401, 1.4521, 1.4552, 1.4541, 1.4520PE, PE-X, PP, PVC, copper materials, copper metal alloys, bronzes, aluminum multicomponent bronze, AB45, ESM, CW024A, CW509L, CW610N, CW613N, CW614N, CW617N, CW702R, CW706R, CW717R, CW715R, CW352H, CW354H, CW307G, CW353H, P195TR1, P195TR2, P235TR1, P235TR2, P195GH, P235GH, P265GH, 8MoB5-4, 16Mo3, X11CrMo9-1+I, 13CrMo4-5, X20CrMoV11-1, P355NH, P195GH, P285GH, 16Mo3, P355NH, materials in accordance with EN 12952/12953, P215NL, P265NL, P355N, P480NL1, P620Q, P890QH, 8460NH, L290NB, L450QB, L245NB, L555MB, L360MB, L280MB, materials in accordance with EN 10208-2, materials in accordance with AD2000 - HP110R, AD2000 - HP120R, AD2000 -W2, AD2000 - W/6, AD2000 - W6/1, AD2000 - W6/2, glass, ceramics, plastic, polyethylene, polyamide, polyvinyl chloride, polytetrafluoroethylene, polyoxymethylene;
a.) the pressure-reducing unit (2) is designed in a sleeve-like manner, which, when assembled, is inserted into the interior of the base body (1) and interacts with an inner contact surface (5) of the base body (1) in a force- and/or form-fitting manner, and/or
b.) the base body (1), when assembled, is inserted into the interior of the wall body (8) and interacts with the wall body (8) in a force-fitting and/or form-fitting manner, **characterized in that** a pre-compressed sealing element (7) is arranged inside the base body (1) between the pressure-reducing unit (2) and a further sealing part (6) following the pressure-reducing unit (2).

2. Pressure fitting according to claim 1, **characterized in that**
a.) the base body (1) is a molded part (3), and/or
b.) the wall body (8) is a molded part (3).

3. Pressure fitting according to one of claims 1 to 2, **characterized in that**
a.) the base body (1) is designed without cast parts and/or forged parts,
and/or
b.) the wall body (8) is designed without cast parts and/or forged parts.

4. Pressure fitting according to one of claims 1 to 3, **characterized in that** the base body and/or the wall body is/are a pipe, T-piece, Y-piece, cross-piece, elbow piece, or a ball-shaped piece.

5. Pressure fitting according to one of claims 1 to 4, **characterized in that** the pressure-reducing unit (2) is designed without cast parts and/or forged parts.

6. Pressure fitting according to one of claims 1 to 5, **characterized in that**
a.) the pressure-reducing unit (2) is designed as a sleeve and as a single part that can be inserted into the base body, and/or
b.) the base body (1) is designed as a single part that can be inserted into the wall body (8).

7. Pressure fitting according to one of claims 1 to 6, **characterized in that** the pressure-reducing unit (2) and/or the base body (1) are mechanically fixed by means of pin-shaped elements (9), spot welding, welding or by means of a thread.

8. Pressure fitting according to any one of claims 1 to 7, **characterized in that** the pressure-reducing unit (2) has at least one pressure-reducing material flow opening (4).

9. Pressure fitting according to claim 8, **characterized in that** the pre-compressed sealing element (7) consists of graphite, PTFE or a rubber-like material.

10. Method for operating pressure fittings, **characterized in that** a pressure fitting according to one of claims 1 to 9 is used.

11. Use of a pressure fitting according to one of claims 1 to 9.

## Revendications

1. Raccord de pression pour flux de matière, comprenant un corps de base (1) avec une unité de réduction de pression (2) séparée disposée à l'intérieur du corps de base (1), l'unité de réduction de pression (2) et/ou le corps de base (1) et/ou , sont constitués : C 22, St. 52, matériaux ferritiques résistants à la chaleur, 16Mo3, 13CrMo44, 10CrMo910, 14MoV63, P91, P92, C22.8, matériaux austénitiques, en particulier 1.4571, 1.4580, 1.4404, 1.4301, 1.4550, 1.4581, 1.4401, 1.4521, 1.4552, 1.4541, 1.4520PE, PE-X, PP, PVC, matériaux en cuivre, alliages métalliques de cuivre, bronzes, bronze multicomposant à base d'aluminium, AB45, ESM, CW024A, CW509L, CW610N, CW613N, CW614N, CW617N, CW702R, CW706R, CW717R, CW715R, CW352H, CW354H, CW307G, CW353H, P195TR1, P195TR2, P235TR1, P235TR2, P195GH, P235GH, P265GH, 8MoB5-4, 16Mo3, X11CrMo9-1+I, 13CrMo4-5, X20CrMoV11-1, P355NH, P195GH, P285GH, 16Mo3, P355NH, matériaux conformes à la norme EN 12952/12953, P215NL, P265NL, P355N, P480NL1, P620Q, P890QH, 8460NH, L290NB, L450QB, L245NB, L555MB, L360MB, L280MB, matériaux EN 10208-2, matériaux AD2000 - HP110R, AD2000 - HP120R, AD2000 -W2, AD2000 - W/6, AD2000 - W6/1, AD2000 - W6/2, verre, céramique, plastique, polyéthylène, polyamide, polychlorure de vinyle, polytétrafluoroéthylène, polyoxyméthylène ;
a.) l'unité de réduction de pression (2) est conçue sous forme de manchon qui, à l'état assemblé, est introduite à l'intérieur du corps de base (1) et interagit par complémentarité de forme et/ou par adhérence avec une surface d'appui intérieure (5) du corps de base (1), et/ou
b.) le corps de base (1) est inséré à l'état assemblé à l'intérieur du corps de paroi (8) et interagit par complémentarité de forme et/ou par adhérence avec le corps de paroi (8), **caractérisé en ce que** à l'intérieur du corps de base (1), entre l'unité de réduction de pression (2) et une autre pièce d'étanchéité (6) suivant l'unité de réduction de pression (2), est disposé un élément d'étanchéité précomprimé (7).

2. Raccord à pression selon la revendication 1, **caractérisé en ce que**
a.) le corps de base (1) est une pièce moulée (3), et/ou
b.) le corps de paroi (8) est une pièce moulée (3).

3. Raccord à pression selon l'une des revendications 1 à 2, **caractérisé en ce que**
a.) le corps de base (1) est conçu sans pièce moulée et/ou sans pièce forgée, et/ou
b.) le corps de paroi (8) est conçu sans pièce moulée et/ou sans pièce forgée.

4. Raccord de pression selon l'une des revendications 1 à 3, **caractérisée en ce que** le corps de base et/ou le corps de paroi sont une conduite, une pièce en T, une pièce en Y, une pièce en croix, une pièce coudée ou une pièce sphérique.

5. Raccord de pression selon l'une des revendications 1 à 4, **caractérisé en ce que** l'unité de réduction de pression (2) est conçue sans pièce moulée et/ou sans pièce forgée.

6. Raccord de pression selon l'une des revendications 1 à 5, **caractérisé en ce que**
a.) l'unité de réduction de pression (2) est conçue sous forme de douille et comme pièce individuelle pouvant être insérée dans le corps de base, et/ou
b.) le corps de base (1) est conçu comme une pièce unique pouvant être insérée dans le corps de paroi (8).

7. Raccord de pression selon l'une des revendications 1 à 6, **caractérisé en ce que** l'unité de réduction de pression (2) et/ou le corps de base (1) sont fixés mécaniquement au moyen d' des éléments en forme de tiges (9), par soudage par points, par soudage ou au moyen d'un filetage.

8. Raccord de pression selon l'une des revendications 1 à 7, **caractérisé en ce que** l'unité de réduction de pression (2) présente au moins une ouverture de flux de matière (4) réduisant la pression.

9. Raccord de pression selon la revendication 8, **caractérisée en ce que** l'élément d'étanchéité précomprimé (7) est en graphite, en PTFE ou en un matériau similaire au caoutchouc.

10. Procédé pour faire fonctionner des raccords de pression, **caractérisé en ce qu'**un raccord de pression selon l'une des revendications 1 à 9 est utilisé.

11. Utilisation d'un raccord de pression selon l'une des revendications 1 à 9.
